# FASCICULE DE BREVET EUROPEEN

(11) **EP 0 722 671 B1**
(45) Date de publication et mention de la délivrance du brevet: **16.08.2000**
(21) Numéro de dépôt: 94810743.8
(22) Date de dépôt: 21.12.1994
(51) Int. Cl.: A23P 1/02, A23L 1/308

(54) **Poudre de matière alimentaire**
Nährungsmittelpulver
Food product powder

(43) Date de publication de la demande: 24.07.1996
(73) Titulaire: SOCIETE DES PRODUITS NESTLE S.A., 1800 Vevey (CH)
(72) Inventeur: Buhler, Marcel, CH-1111 Tolochenaz (CH); Ho Dac, Thang, CH-1052 Le Mont S/Lausanne (CH); Zurcher, Ulrich, CH-1400 Yverdon (CH)
(74) Mandataire: Wavre, Claude-Alain

(56) Documents cités:
- EP-A- 0 138 628
- EP-A- 0 405 651
- WO-A-92/21623
- GB-A- 1 581 859
- GB-A- 2 199 481
- US-A- 4 181 534
- US-A- 4 865 863
- PATENT ABSTRACTS OF JAPAN vol. 014 no. 019 (M-919) ,16 Janvier 1991 & JP-A-01 260285 (SEIFUNKI) 17 Octobre 1989,

## Description

La présente invention a pour objet un procédé de production de poudre de matière alimentaire, dans lequel on moud et sèche une matière alimentaire fibreuse et humide, ainsi qu'une utilisation d'un appareil pour la production d'une telle poudre.

On connaît divers procédés et appareils de traitement ou séchage de résidus de pressage ou centrifugation de matières aqueuses contenant des insolubles, notamment une proportion notable de fibres végétales.

WO 9221623 (ALB. KLEIN GMBH & CO KG) décrit le pressage de boues de stations de clarification des eaux et le séchage du résidu de pressage dans au moins deux sécheurs successifs, à savoir un sécheur à cône et un sécheur à disques segmentés, par exemple.

GB 1581859 (GRAMPEX PROTEIN LTD) décrit la fabrication en continu de farine de poisson à partir de chair de poisson broyée, dans un appareil comprenant un corps cylindrique et un rotor axial muni de palettes qui agitent et transportent la masse, des corps de chauffe étant prévus sous forme d'anneaux coaxiaux espacés à l'intérieur et le long du corps cylindrique.

JP 01260285 (TOKAI SEIFUNKI SEIS) décrit un sécheur pour réduire en poudre des tourteaux de soya ou de sake, comprenant un corps cylindrique horizontal, un rotor axial muni de jeux de palettes de transport et d'agitation en forme de disques, et des grilles disposées entre les jeux de palettes qui présentent une ouverture de maille toujours plus petite d'amont en aval et règlent le temps de séjour dans l'appareil de la matière à sécher.

La présente invention a pour but de proposer un procédé de production d'une poudre de matière alimentaire par mouture et séchage d'une matière alimentaire fibreuse et humide qui soit particulièrement efficace et qui permette en outre de désodoriser cette matière.

A cet effet, le procédé selon la présente invention, dans lequel on moud ladite matière alimentaire fibreuse et humide par attrition en la projetant contre une surface dure et on la sèche simultanément à l'air chaud, est remarquable par le fait que l'on moud ladite matière alimentaire fibreuse et humide par attrition en la projetant contre une surface dure en forme de paroi intérieure cylindrique verticale à l'aide d'un rotor axial comprenant un arbre auquel sont fixés des éléments de projection, et l'on sèche simultanément cette matière alimentaire en faisant circuler un courant d'air chaud entre le rotor et la paroi.

A cet effet également, la présente invention comprend aussi l'utilisation, pour la production d'une poudre de matière alimentaire par mouture et séchage d'une matière alimentaire fibreuse et humide, d'un appareil de mouture par attrition capable de projeter ladite matière contre une surface dure tout en la séchant simultanément à l'air chaud, remarquable par le fait que l'appareil comprend un corps cylindrique vertical présentant une surface dure en forme de paroi intérieure cylindrique verticale, un rotor axial comprenant un arbre auquel sont fixés des éléments de projection, un dispositif de chauffage d'air et propulsion de l'air chaud de bas en haut entre ladite paroi et ledit rotor, un dispositif d'alimentation en matière première par le bas et un dispositif d'évacuation de la matière moulue par le haut.

On a constaté avec surprise qu'un tel procédé et un tel appareil permettent effectivement de préparer une poudre de matière alimentaire agréable au goût avec une grande efficacité et une réelle économie de moyens et d'énergie, en comparaison des procédés connus, a partir d'une matière alimentaire fibreuse et humide pouvant nécessiter, notamment, une désodorisation efficace.

Pour mettre en oeuvre le procédé selon la présente invention, on peut partir d'une matière première fibreuse et humide choisie dans un groupe comprenant les résidus d'extraction de jus de fruits ou légumes, les résidus d'extraction de sucre de betteraves, les résidus de pressage de suspensions aqueuses d'hydrolysats de matières végétales et les marcs de café, par exemple.

Par l'expression "résidu de pressage d'une suspension aqueuse d'un hydrolysat de matières végétales" on comprend dans le cadre du présent exposé un sous-produit de la fabrication d'agents aromatisants du type sauce de soya obtenu lorsque, pour en exprimer ladite sauce, on presse une suspension aqueuse de matière végétale riche en protéines telle que le soya, de préférence additionnée d'une matière riche en hydrates de carbone telle que les céréales, notamment le blé, hydrolysée enzymatiquement et/ou par fermentation, par exemple.

Une telle matière première peut présenter une teneur en eau de 20-40%, par exemple, cette eau étant incrustée dans un magma de fibres végétales dont il est très difficile de l'extraire. Grâce au présent procédé, on peut néanmoins séparer cette eau des fibres tout en libérant et en évacuant simultanément une quantité apparemment importante de substances volatiles piégées dans le magma de fibres végétales. On peut ainsi moudre cette matière première et la sécher simultanément jusqu'à une teneur en eau résiduelle de 3-12%, par exemple, tout en la désodorisant de manière étonnamment efficace.

On moud ladite matière première par attrition en la projetant contre une surface dure en forme de paroi intérieure cylindrique verticale à l'aide d'un rotor axial comprenant un arbre auquel sont fixés des éléments de projection, et l'on peut sécher simultanément la matière en faisant circuler un courant d'air chaud entre le rotor et la paroi.

On peut notamment introduire ladite matière en continu entre ledit rotor et ladite paroi par le bas, recueillir la matière moulue et séchée en continu par le haut et faire circuler un courant d'air chaud entre le rotor et la paroi de bas en haut, par exemple.

Cet air chaud peut avoir une température de 50-400°C, par exemple. Il présente de préférence une température de 200-400°C au début du séchage et de 50 à moins de 200°C à la fin du séchage.

L'appareil que l'on utilise pour la production d'une poudre de matière alimentaire selon la présente invention est donc un appareil de mouture par attrition capable de projeter ladite matière contre une surface dure tout en la séchant simultanément à l'air chaud.

Cet appareil comprend un corps cylindrique vertical présentant une surface dure en forme de paroi intérieure cylindrique verticale, un rotor axial comprenant un arbre auquel sont fixés des éléments de projection, un dispositif de chauffage d'air et propulsion de l'air chaud de bas en haut entre ladite paroi et ledit rotor, un dispositif d'alimentation en matière première par le bas et un dispositif d'évacuation de la matière moulue par le haut.

L'appareil utilisé selon la présente invention est décrit plus en détails ci-après en référence au dessin annexé dans lequel:

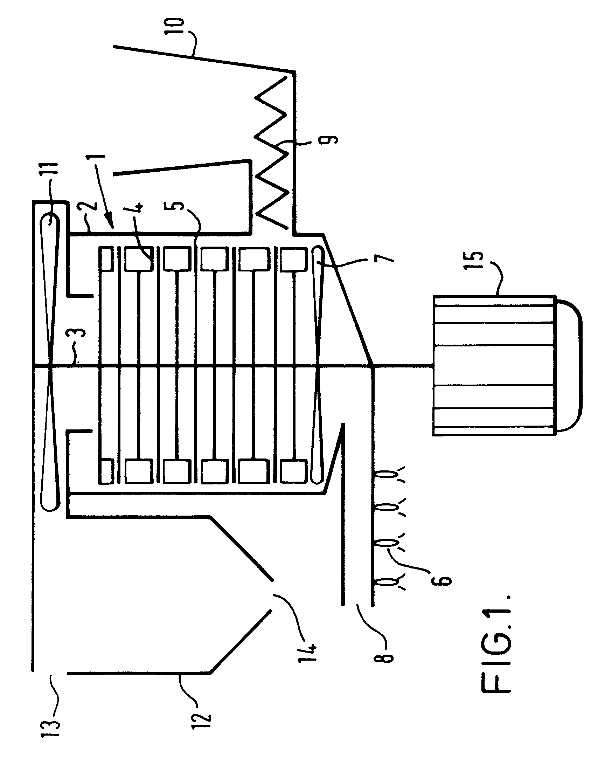

- la figure 1 représente une vue schématique en coupe verticale d'une forme de réalisation de cet appareil.

La forme de réalisation de l'appareil représenté au dessin comprend un corps cylindrique vertical 1 présentant une surface dure en forme de paroi intérieure cylindrique verticale 2, un rotor axial entraîné par un moteur 15 et comprenant un arbre 3 auquel sont fixés des éléments de projection en forme de palettes 4 et de disques 5, un dispositif 6-8 de chauffage d'air et propulsion de l'air chaud de bas en haut entre ladite paroi 2 et ledit rotor 3, un dispositif 9-10 d'alimentation en matière première par le bas et un dispositif d'évacuation 11-14 de la matière moulue par le haut.

Ledit dispositif de chauffage et propulsion d'air comprend une prise d'air 8, une rampe de chauffage à gaz 6 et un ventilateur aspirateur-propulseur 7.

Ledit dispositif d'alimentation en matière première comprend une trémie 10 et une vis d'alimentation 9.

Ledit dispositif d'évacuation de la matière moulue comprend un ventilateur aspirateur-éjecteur 11 et un cyclone 12 présentant une sortie d'air 13 par le haut et une sortie de poudre 14 par le bas.

Le procédé selon la présente invention est décrit plus en détails dans les exemples ci-après où les pourcentages et parties sont donnés en poids.

### Exemple 1

A l'aide d'un appareil tel que celui représenté au dessin, en l'occurrence un moulin SEPTU de type ultrafine V-5, on produit une poudre de matière alimentaire à partir d'un résidu de pressage d'un agent aromatisant préparé de manière semblable à celle décrite à l'exemple 2 du brevet US 5141757.

On prépare ainsi une suspension aqueuse à 20% de matière sèche d'une farine de soya dégraissée. On hydrolyse cette suspension à l'aide d'une protéase bactérienne alcaline durant 3 h à 68°C à un pH initial de 10 qui tombe en 5-10 min à 7,5. On stérilise la suspension par injection de vapeur et on la refroidit à 30-35°C. On lui ajoute du koji sous forme d'un mélange de soya cuit et de blé rôti concassé fermenté durant 44 h avec une culture de spores d'Aspergillus oryzae, à raison de 20% de koji sur matière sèche de la suspension. On lui ajoute également du chlorure de sodium, en quantité telle qu'elle présente une teneur en chlorure de sodium de 14%. On ajuste le pH de la suspension à 5,4 par addition d'acide citrique. On inocule la suspension avec 2% en volume d'une culture mixte de *Saccharomyces rouxii* et de *Torulopsis etchelsii*. On laisse mûrir à 33°C durant quatre semaines. On presse alors la suspension à l'aide d'une presse hydraulique pour en exprimer le jus.

Le résidu de ce pressage présente la composition suivante:

| | |
|---|---|
| teneur en eau | 32,0% |
| protéines | 30,6% |
| matière grasse | 4,0% |
| fibres | 17,0% |
| hydrates de carbone | 5,6% |
| cendres | 10,8% |

On introduit ce résidu en continu dans ledit appareil à raison de 500 kg/h. Le rotor tourne à 4850 tours/min. On propulse au travers de l'appareil de l'air chauffé à 200°C. Il en sort en entraînant le résidu réduit en poudre à une température d'environ 120°C.

La poudre ainsi produite présente une teneur en eau résiduelle de environ 9% et un goût neutre et agréable. Elle ne présente aucune odeur indésirable. Elle peut être utilisée dans la préparation de produits alimentaires comme additif riche en protéines et en fibres alimentaires.

### Exemple 2

On procède de la manière décrite à l'exemple 1, à l'exception du fait que l'on propulse au travers de l'appareil de l'air chauffé à 400°C et qu'il en sort à une température d'environ 190°C.

La poudre ainsi produite présente une teneur en eau résiduelle de environ 7% et un goût neutre, agréable, et légèrement toasté. Elle ne présente aucune odeur indésirable. Elle peut être utilisée dans la préparation de produits alimentaires comme additif riche en protéines et en fibres alimentaires.

### Exemple 3

On utilise la poudre telle qu'obtenue à l'exemple 1 ou 2 dans un mélange à traiter par cuisson-extrusion pour la production d'un produit de type panure. Le mélange présente une teneur en eau de 12% et comprend, en % en poids de matière sèche:

| | |
|---|---|
| farine de blé | 75,0% |
| chlorure de sodium | 2,0% |
| sucres | 6,0% |
| poudre de lait écrémé | 2,0% |
| poudre de l'ex. 1 ou 2 | 15,0% |

On cuit-extrude ce mélange dans un extrudeur bivis à une température de 150-180°C sous une pression de 140-180 bar et l'on moud le produit cuit-extrudé.

Le produit de type panure ainsi obtenu peut être utilisé tel quel, notamment sans addition d'autre agent renforçateur d'arôme, pour enrober des tranches de viande et préparer ainsi des escalopes de veau ou de dinde panées, ou pour enrober des tranches de poisson à griller et leur conférer une note aromatique de type asiatique, par exemple.

### Exemple 4

On procéde de la manière décrite à l'exemple 3, à l'exception du fait que, dans la composition dudit mélange à traiter par cuisson-extrusion, l'on augmente la proportion de poudre selon l'exemple 1 ou 2 jusqu'à 30 % sur matière sèche.

Ce mélange cuit-extrudé et broyé peut être utilisé comme aromate dans un potage pour lui conférer une note aromatique de type asiatique, ou dans le pain comme renforçateur d'arôme, par exemple.

## Revendications

1. **.** Procédé de production d'une poudre de matière alimentaire, dans lequel on moud une matière alimentaire fibreuse et humide par attrition en la projetant contre une surface dure et on la sèche simultanément à l'air chaud, caractérisé par le fait que l'on moud ladite matière alimentaire fibreuse et humide par attrition en la projetant contre une surface dure en forme de paroi intérieure cylindrique verticale à l'aide d'un rotor axial comprenant un arbre auquel sont fixés des éléments de projection, et l'on sèche simultanément cette matière alimentaire en faisant circuler un courant d'air chaud entre le rotor et la paroi.

2. Procédé selon la revendication 1, dans lequel on introduit ladite matière alimentaire fibreuse et humide en continu entre ledit rotor et ladite paroi par le bas, on recueille la matière alimentaire moulue et séchée en continu par le haut et l'on fait circuler un courant d'air chaud entre le rotor et la paroi de bas en haut.

3. Procédé selon la revendication 1, dans lequel ladite matière alimentaire fibreuse et humide est choisie dans un groupe comprenant les résidus d'extraction de jus de fruits ou légumes, les résidus d'extraction de sucre de betteraves, les résidus de pressage de suspensions aqueuses d'hydrolysats de matières végétales et les marcs de café, par exemple.

4. Procédé selon la revendication 1, dans lequel ladite matière alimentaire fibreuse et humide est un résidu de pressage d'une suspension aqueuse d'un hydrolysat de matières végétales, ledit résidu présente une teneur en eau de 20-40% et on le sèche jusqu'à une teneur en eau résiduelle de 3-12%.

5. Procédé selon la revendication 1, dans lequel ledit air chaud présente une température de 200-400°C au début du séchage et de 50 à moins de 200°C à la fin du séchage.

6. Utilisation, pour la production d'une poudre de matière alimentaire par mouture et séchage d'une matière alimentaire fibreuse et humide, d'un appareil de mouture par attrition capable de projeter ladite matière contre une surface dure tout en la séchant simultanément à l'air chaud, caractérisée par le fait que l'appareil comprend un corps cylindrique vertical présentant une surface dure en forme de paroi intérieure cylindrique verticale, un rotor axial comprenant un arbre auquel sont fixés des éléments de projection, un dispositif de chauffage d'air et propulsion de l'air chaud de bas en haut entre ladite paroi et ledit rotor, un dispositif d'alimentation en matière première par le bas et un dispositif d'évacuation de la matière moulue par le haut.

## Claims

1. Process for producing a powdered food material, wherein a wet fibrous food material is milled by attrition by projecting it against a hard surface and is dried simultaneously with hot air, characterized in that the said wet fibrous food material is milled by attrition by projecting it against a hard surface in the form of a vertical cylindrical inner wall with the aid of an axial rotor comprising a shaft to which projection elements are fixed, and this food material is dried simultaneously by circulating a current of hot air between the rotor and the wall.

2. Process according to claim 1, wherein the said wet fibrous food material is introduced continuously between the said rotor and the said wall at the bottom, the milled and dried food material is collected continuously at the top, and a current of hot air is circulated between the rotor and the wall in an upwards direction.

3. Process according to claim 1, wherein the said wet fibrous food material is chosen from a group comprising residues from the extraction of fruit or vegetable juices, residues from the extraction of beet sugar and residues from the pressing of aqueous suspensions of the hydrolysates of vegetable materials and coffee grounds, for example,

4. Process according to claim 1, wherein the said wet fibrous food material is a residue from the pressing of a an aqueous suspension of a hydrolysate of vegetable materials, the said residue having a water content of 20-40 % and wherein it is dried to a residual water content of 3-12 %.

5. Process according to claim 1, wherein the said hot air has a temperature of 200-400°C at the start of drying and from 50 to less than 200°C at the end of drying.

6. Use, for the production of a powdered food material by milling and drying a wet fibrous food material, of an apparatus for milling by attrition capable of projecting the said material against a hard surface while drying it simultaneously with hot air, characterized in that the apparatus comprises a vertical cylindrical body having a hard surface in the form of a vertical cylindrical inner wall, an axial rotor comprising a shaft to which are fixed projection elements, a device for heating air and propelling hot air upwards between the said wall and the said rotor, a device for feeding the raw material at the bottom and a device for removing the milled material at the top.

## Patentansprüche

1. Verfahren zur Herstellung eines Nahrungsmittelpulvers, bei dem man ein faseriges und feuchtes Nahrungsmittel durch Verreiben mahlt, indem man es gegen eine harte Oberfläche schleudert und es gleichzeitig mit warmer Luft trocknet, dadurch gekennzeichnet, daß man das faserige und feuchte Nahrungsmittel durch Verreiben mahlt, indem man es gegen eine harte Oberfläche in Form einer inneren zylindrischen vertikalen Wand mit Hilfe eines axialen Rotors schleudert, der eine Welle aufweist, an der Schleuderelemente befestigt sind, und man gleichzeitig dieses Nahrungsmittel trocknet, indem man einen warmen Luftstrom zwischen dem Rotor und der Wand zirkulieren läßt.

2. Verfahren nach Anspruch 1, bei dem man das faserige und feuchte Nahrungsmittel kontinuierlich von unten zwischen den Rotor und die Wand einführt, das gemahlene und getrocknete Nahrungsmittel kontinuierlich oben sammelt und man einen warmen Luftstrom zwischen dem Rotor und der Wand von unten nach oben zirkulieren läßt.

3. Verfahren nach Anspruch 1, bei dem das faserige und feuchte Nahrungsmittel ausgewählt wird aus einer Gruppe, die z.B. Rückstände der Extraktion von Frucht- oder Gemüsesaft, Rückstände der Extraktion von Zucker aus Zuckerrüben, Preßrückstände von wässrigen Suspensionen von Hydrolysaten von pflanzlichen Stoffen und Kaffeesatz umfaßt.

4. Verfahren nach Anspruch 1, bei dem das faserige und feuchte Nahrungsmittel ein Preßrückstand einer wässrigen Suspension eines Hydrolysats von pflanzlichen Stoffen ist, wobei der Rückstand einen Wassergehalt von 20-40% aufweist und man ihn bis zu einem Restwassergehalt von 3-12% trocknet.

5. Verfahren nach Anspruch 1, wobei die warme Luft eine Temperatur von 200-400°C am Anfang der Trocknung und von 50 bis zu 200°C am Ende der Trocknung aufweist.

6. Verwendung einer Reibmahlvorrichtung, die das Schleudern des Nahrungsmittels gegen eine harte Oberfläche ermöglicht, wobei es gleichzeitig mit warmer Luft getrocknet wird, zur Herstellung eines Nahrungsmittelpulvers durch Mahlen und Trocknen eines faserigen und feuchten Nahrungsmittels, dadurch gekennzeichnet, daß die Vorrichtung ein zylindrisches vertikales Gehäuse umfasst, das eine harte Oberfläche in Form einer inneren zylindrischen vertikalen Wand aufweist, einen axialen Rotor, der eine Welle aufweist, an der Schleuderelemente befestigt sind, eine Vorrichtung zur Erwärmung von Luft und zum Fördern von warmer Luft zwischen der Wand und dem Rotor von unten nach oben, eine Vorrichtung zum Einspeisen der Rohstoffe von unten und eine Vorrichtung zum Abführen der gemahlenen Nahrungsmittel von oben.
